# EUROPEAN PATENT APPLICATION

(11) **EP 4 778 616 A1**
(43) Date of publication of application: **22.07.2026**
(21) Application number: 24865432.9
(22) Date of filing: 10.09.2024
(51) Int. Cl.: B01D 53/32

(54) **ELECTROCHEMICAL CELL UNIT**

(30) Priority: 12.09.2023 JP 2023147932
(71) Applicant: Kyocera Corporation, Kyoto-shi, Kyoto 612-8501 (JP)
(72) Inventor: ABE, Kodai, Kyoto-shi, Kyoto 612-8501 (JP); KAMEDA, Kenta, Kyoto-shi, Kyoto 612-8501 (JP)
(74) Representative: TBK
(86) International application number: PCT/JP2024/032344
(87) International publication number: WO 2025/057932

(57) **Abstract**

An electrochemical cell unit includes an electrochemical cell and a pressing member. The electrochemical cell includes a first electrode having an absorbent that absorbs carbon dioxide, a second electrode, and an insulation layer positioned between the first electrode and the second electrode. The pressing member is positioned on a side opposite to the insulation layer with the first electrode interposed therebetween, the pressing member pressing the electrochemical cell.

## Description

### TECHNICAL FIELD

The present disclosure relates to an electrochemical cell unit.

### BACKGROUND OF INVENTION

An electrochemical cell for recovering carbon dioxide from a gas and reusing the carbon dioxide is known.

### CITATION LIST

### PATENT LITERATURE

Patent Document 1: US Patent Application Publication No. 2023/0183872
Patent Document 2: Japanese Unexamined Patent Application Publication No. 2022-67545

### SUMMARY

An electrochemical cell unit according to an aspect of an embodiment includes an electrochemical cell and a pressing member. The electrochemical cell includes a first electrode having an absorbent that absorbs carbon dioxide, a second electrode, and an insulation layer positioned between the first electrode and the second electrode. The pressing member is positioned on a side opposite to the insulation layer with the first electrode interposed therebetween, the pressing member pressing the electrochemical cell.

### BRIEF DESCRIPTION OF THE DRAWINGS

FIG. 1 is a cross-sectional view illustrating an example of an electrochemical cell unit according to an embodiment.
FIG. 2 is a cross-sectional view illustrating another example of the electrochemical cell unit according to the embodiment.
FIG. 3 is a plan view illustrating an example of a pressing member included in the electrochemical cell unit according to the embodiment.
FIG. 4 is a plan view illustrating another example of the pressing member included in the electrochemical cell unit according to the embodiment.
FIG. 5 is a plan view illustrating another example of the pressing member included in the electrochemical cell unit according to the embodiment.
FIG. 6 is a plan view illustrating another example of the pressing member included in the electrochemical cell unit according to the embodiment.
FIG. 7 is a plan view illustrating another example of the pressing member included in the electrochemical cell unit according to the embodiment.
FIG. 8 is a plan view illustrating another example of the pressing member included in the electrochemical cell unit according to the embodiment.
FIG. 9 is a plan view illustrating another example of the pressing member included in the electrochemical cell unit according to the embodiment.

### DESCRIPTION OF EMBODIMENTS

In the above-described electrochemical cell, for example, there is room for enhancement in reliability during actual use.

Thus, provision of an electrochemical cell unit that can improve reliability is desired.

An embodiment of an electrochemical cell unit disclosed in the present application will be described in detail below with reference to the accompanying drawings. Note that the disclosure is not limited to the following embodiment.

Note that the drawings are schematic and that the dimensional relationships between elements, the proportions of each of the elements, and the like may differ from the actual ones. There may be differences between the drawings in the dimensional relationships, proportions, and the like.

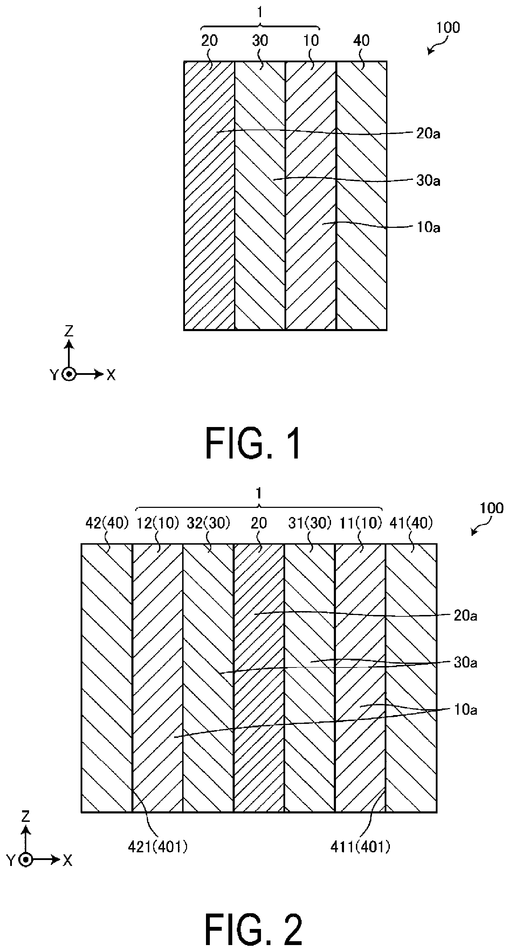

Note that, for the sake of clarity, FIG. 1 illustrates a three-dimensional orthogonal coordinate system including a Z axis in which a vertically upward direction is a positive direction and a vertically downward direction is a negative direction. Such an orthogonal coordinate system may also be illustrated in other drawings used in the following description. The components similar to those of the electrochemical cell unit illustrated in FIG. 1 are denoted by the same reference signs and description thereof will be omitted or simplified.

### Embodiment

### Configuration of Electrochemical Cell Unit

FIG. 1 is a cross-sectional view illustrating an example of the electrochemical cell unit according to an embodiment. Hereinafter, an electrochemical cell may be simply referred to as a cell. In addition, the electrochemical cell unit may be simply referred to as a cell unit.

As illustrated in FIG. 1, a cell unit 100 includes a cell 1 and a pressing member 40. The cell 1 includes a first electrode 10, a second electrode 20, and an insulation layer 30. The first electrode 10 and the second electrode 20 face each other with the insulation layer 30 interposed therebetween.

The cell 1 recovers carbon dioxide in a gas. The cell 1 is connected to a non-illustrated power supply that applies voltage between the first electrode 10 and the second electrode 20. The cell 1 is an electrochemical cell capable of repeatedly performing adsorption and desorption of carbon dioxide by switching the voltage applied between the first electrode 10 and the second electrode 20.

The first electrode 10 is a negative electrode to which electrons are supplied from the second electrode 20 in an adsorption mode in which the cell 1 performs adsorption of carbon dioxide.

The first electrode 10 is a porous conductive material through which a gas containing carbon dioxide can flow. As the first electrode 10, for example, a metal material obtained by processing a metal such as Al or Ni into a mesh shape can be used.

The first electrode 10 has an absorbent 10a. The absorbent 10a is a CO₂ absorbent that absorbs carbon dioxide. The absorbent 10a can perform adsorption and desorption of carbon dioxide by utilizing a redox reaction. The absorbent 10a binds to carbon dioxide in a gas in a reduced state to adsorb carbon dioxide. In addition, the absorbent 10a desorbs carbon dioxide in an oxidized state to release carbon dioxide.

As a material for the absorbent 10a, for example, quinones, imines, imides, and derivatives thereof can be used. For example, polyanthraquinone may be used as a quinone, polydiazaphthalimide may be used as an imide, and polybenzothiadiazole may be used as an imine. The polyanthraquinone may be, for example, poly-(1,4-anthraquinone), and may also be poly-(1,5-anthraquinone), poly-(1,8-anthraquinone), poly-(2,6-anthraquinone), or the like.

The absorbent 10a may be positioned inside the first electrode 10, and may be positioned on a surface of the first electrode 10, which faces the insulation layer 30.

The second electrode 20 is a positive electrode that releases electrons to the first electrode 10 in the adsorption mode in which the cell 1 performs adsorption of carbon dioxide.

The second electrode 20 is, for example, a plate-like metal member. As the second electrode 20, for example, a metal plate obtained by processing a metal such as Al into a plate shape can be used.

The second electrode 20 may have an electron-supplying material 20a. The electron-supplying material 20a is capable of transferring electrons between the electron-supplying material 20a and the first electrode 10 by utilizing a redox reaction. The electron-supplying material 20a releases electrons in the adsorption mode. The electron-supplying material 20a attracts electrons in a desorption mode in which the cell 1 performs desorption of carbon dioxide.

As the material for the electron-supplying material 20a, for example, metal complexes, organic compounds, inorganic compounds, carbon materials, and the like can be used. As metal complexes that can be used as the material for the electron-supplying material 20a, for example, ferrocene, nickelocene, cobaltocene, and the like can be used. These metal complexes may be polymers or monomers. As organic compounds that can be used as the material for the electron-supplying material 20a, for example, poly(3-(4-fluorophenyl)thiophene), phenothiazine and the like may be used. As inorganic compounds that can be used as the material for the electron-supplying material 20a, for example, RuO₂, MnO₂, MoS₂ and the like may be used. As carbon materials that can be used as the material for the electron-supplying material 20a, for example, carbon black, activated carbon, and the like may be used. The electron-supplying material 20a can be positioned on a surface of the second electrode 20, which faces the insulation layer 30.

The insulation layer 30 is positioned between the first electrode 10 and the second electrode 20. The insulation layer 30 is a separator that keeps a short circuit from occurring between the first electrode 10 and the second electrode 20. As the insulation layer 30, for example, a porous separator can be used. The material for the insulation layer 30 may be, for example, a resin or ceramic porous body.

An electrolyte 30a is positioned in the insulation layer 30. As the electrolyte 30a, for example, an electrolytic solution having fluidity can be used. The electrolytic solution may contain an ionic liquid. The electrolytic solution may be an ionic liquid.

The pressing member 40 is positioned on a side opposite to the insulation layer 30 with the first electrode 10 interposed therebetween. The pressing member 40 presses the cell 1, thereby reducing occurrence of peeling or lifting of the first electrode 10 or the second electrode 20 of the cell 1 due to temperature change, voltage application, or the like. Accordingly, the reliability of the cell unit 100 according to the present embodiment can be improved.

The pressing member 40 is, for example, a metal member having a desired rigidity. As the pressing member 40, for example, stainless steel (SUS) or the like can be used. Note that a detailed shape of the pressing member 40 will be described later.

FIG. 2 is a cross-sectional view illustrating another example of the electrochemical cell unit according to the embodiment.

As illustrated in FIG. 2, the first electrode 10 of the cell 1 in the cell unit 100 may include a first member 11 and a second member 12. The first member 11 and the second member 12 may be positioned such that they face each other with the second electrode 20 interposed therebetween.

The insulation layer 30 may include a first insulation layer 31 positioned between the first member 11 and the second electrode 20, and a second insulation layer 32 positioned between the second member 12 and the second electrode 20.

The pressing member 40 may include a first pressing member 41 positioned on a side opposite to the first insulation layer 31 with the first member 11 interposed therebetween, and a second pressing member 42 positioned on a side opposite to the second insulation layer 32 with the second member 12 interposed therebetween.

In this manner, since the first electrode 10 includes the first member 11 and the second member 12, the absolute amount of carbon dioxide that can be recovered by the cell 1 increases.

The cell unit 100 according to the present embodiment may be pressed by the pressing members 40 positioned on the respective sides of the cell 1. The cell unit 100 according to the present embodiment can further reduce occurrence of peeling or lifting of the first electrode 10 or the second electrode 20 of the cell 1 due to temperature change, voltage application, or the like. Accordingly, the reliability of the cell unit 100 according to the present embodiment can be further improved.

### Configuration of Pressing Member

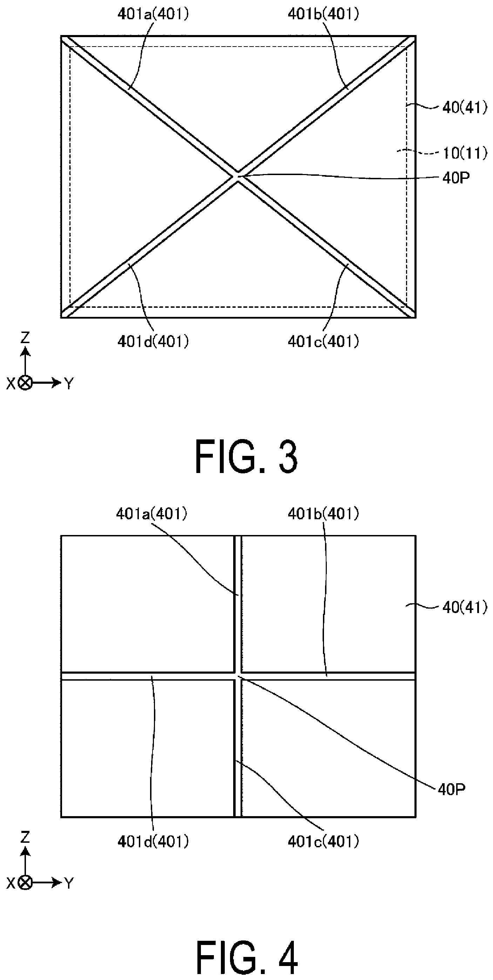

FIG. 3 is a plan view illustrating an example of the pressing member included in the electrochemical cell unit according to the embodiment. As illustrated in FIG. 3, the pressing member 40 may include a first convex portion 401 that protrudes toward the first electrode 10. The first convex portion 401 may be in contact with the first electrode 10. Specifically, the first electrode 10 may be pressed by the first convex portion 401 of the pressing member 40. The cell unit 100 including the pressing member 40 can reduce occurrence of peeling or lifting of the first electrode 10 or the second electrode 20 of the cell 1 due to temperature change, voltage application, or the like. Accordingly, the reliability of the cell unit 100 according to the present embodiment can be improved.

In addition, a space corresponding to the height of the first convex portion 401 may be formed between the first electrode 10 and the pressing member 40. Since a gas containing carbon dioxide can flow through the space, the chance of contact between the first electrode 10 and carbon dioxide increases. Thus, the adsorption capability of carbon dioxide of the cell unit 100 according to the present embodiment can be improved.

The first convex portion 401 may include a plurality of protruding portions 401a to 401d that extend radially outward from a center 40P of the pressing member 40 in a plan view. A center portion of the cell 1, which overlaps the center 40P of the pressing member 40 in a plan view tends to undergo a larger amount of expansion and contraction than other portions of the cell 1. The cell unit 100 according to the present embodiment can further reduce occurrence of peeling or lifting of the first electrode 10 or the second electrode 20 of the cell 1 due to temperature change, voltage application, or the like. Accordingly, the reliability of the cell unit 100 according to the present embodiment can be further improved.

In a case where a space is formed between the first electrode 10 and the pressing member 40, a gas containing carbon dioxide may flow through the space. Accordingly, the chance of contact between the first electrode 10 and carbon dioxide increases. Thus, the adsorption capability of carbon dioxide of the cell unit 100 according to the present embodiment can be improved.

In a plan view of the cell 1, the contour of the first electrode 10 may be positioned inside the contour of the pressing member 40, or may coincide with the contour of the pressing member 40. Thus, the pressing member 40 can press the entire first electrode 10, and accordingly, the reliability of the cell unit 100 according to the present embodiment can be further improved.

Note that the shape of the pressing member 40 illustrated in FIG. 3 is applicable not only to the first pressing member 41 illustrated in FIG. 2 but also to the second pressing member 42. Specifically, the shape of the first convex portion 401 may be applied to the shape of a first convex portion 411 (refer to FIG. 2) included in the first pressing member 41 and/or the shape of a first convex portion 421 (refer to FIG. 2) included in the second pressing member 42.

In the pressing member 40 illustrated in FIG. 3, the first convex portion 401 is positioned along diagonal lines each connecting diagonal corners of the pressing member 40 in a plan view, but the shape of the first convex portion 401 included in the pressing member 40 is not limited to that illustrated in FIG. 3.

FIGs. 4 to 9 are plan views illustrating other examples of the pressing member included in the electrochemical cell unit according to the embodiment.

As illustrated in FIG. 4, the first convex portion 401 may include a plurality of protruding portions 401a to 401d that extend from the center 40P of the pressing member 40 in a plan view toward respective sides of the pressing member 40 in a plan view.

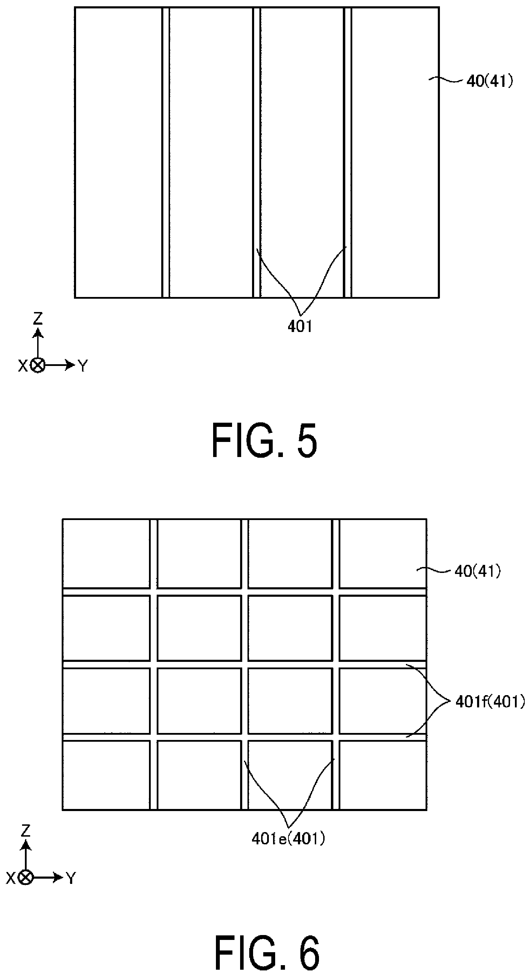

As illustrated in FIG. 5, the first convex portion 401 may include a plurality of protruding portions that extend along the Z axis from one end side of the pressing member 40 in the Z axis direction toward the other end side in a plan view.

As illustrated in FIG. 6, the first convex portion 401 may include a plurality of protruding portions 401e that extend along the Z axis from one end side of the pressing member 40 in the Z axis direction toward the other end side in a plan view, and a plurality of protruding portions 401f that extend along the Y axis from one end side of the pressing member 40 in the Y axis direction toward the other end side.

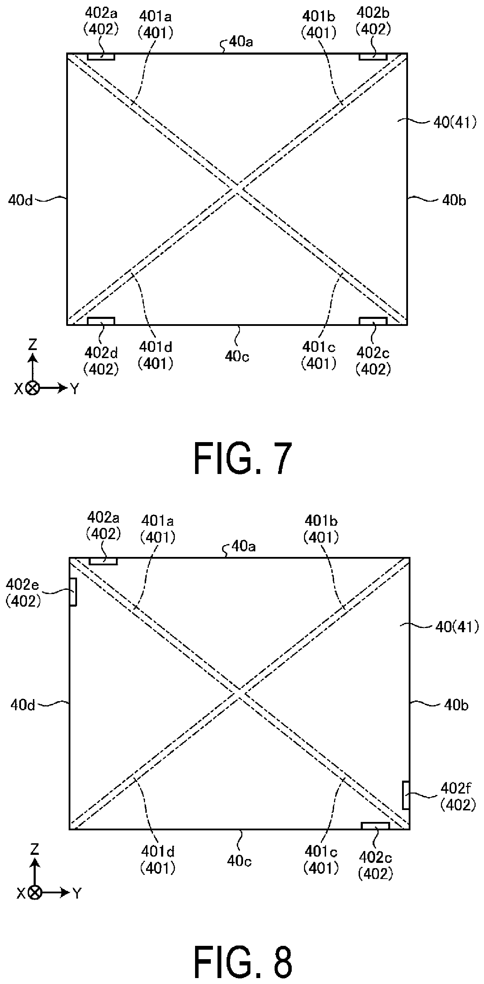

As illustrated in FIG. 7, the pressing member 40 may include a second convex portion 402. The second convex portion 402 may protrude from side portions of the pressing member 40 toward the cell 1 in a plan view. The side portions of the pressing member 40 refer to sides 40a to 40d of the pressing member 40 in a plan view and their vicinities. Since the pressing member 40 includes the second convex portion 402, flow of a gas containing carbon dioxide between the pressing member 40 and the first electrode 10 can be restricted.

Note that the second convex portion 402 may include a plurality of protruding portions 402a to 402d positioned at opposite side portions of the pressing member 40 in a plan view. As illustrated in FIG. 7, the second convex portion 402 may include protruding portions 402a and 402b positioned on the side 40a of the pressing member 40 in a plan view, and protruding portions 402c and 402d positioned on the side 40c that is opposite to the side 40a. Accordingly, flow of a gas containing carbon dioxide between the pressing member 40 and the first electrode 10 can be restricted to one direction.

Disposition of the second convex portion 402 is not limited to that illustrated in FIG. 7. For example, as illustrated in FIG. 8, the second convex portion 402 may include a protruding portion 402a positioned on the side 40a of the pressing member 40 in a plan view, a protruding portion 402f positioned on the side 40b thereof in a plan view, a protruding portion 402c positioned on the side 40c in a plan view, and a protruding portion 402e positioned on the side 40d in a plan view.

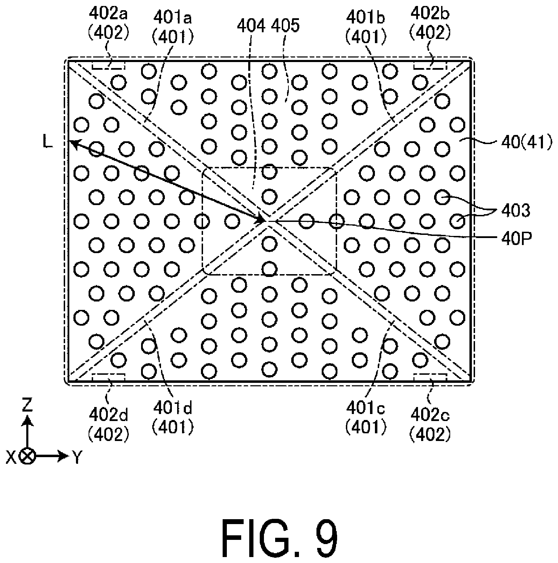

As illustrated in FIG. 9, the pressing member 40 may have a plurality of openings 403 that extend through the pressing member 40 in the thickness direction. Accordingly, a gas containing carbon dioxide can flow toward the first electrode 10 not only from between the pressing member 40 and the first electrode 10 but also from the outside of the pressing member 40. As a result, the chance of contact between the first electrode 10 and carbon dioxide increases. Thus, the adsorption capability of carbon dioxide of the cell unit 100 according to the present embodiment can be improved.

A greater number of the openings 403 may be positioned in a peripheral region 405 located outside a center region 404 of the pressing member 40 in a plan view than in the center region 404. When a large number of the openings 403 are positioned in the peripheral region 405, a reaction distance at the first electrode 10 can be ensured, and accordingly, the chance of contact between the first electrode 10 and carbon dioxide increases. Thus, the adsorption capability of carbon dioxide of the cell unit 100 according to the present embodiment can be improved. The center region 404 refers to a region in which the distance from the center 40P of the pressing member 40 is equal to or less than L × 1/3, where L is the length from the center 40P of the pressing member 40 to an outer edge thereof in a plan view. In addition, a state in which a large number of the openings 403 are positioned refers to a state in which the number of the openings 403 positioned per unit surface area of the pressing member 40 in a plan view is large.

Note that, in FIGs. 7 and 8, the pressing member 40 including the first convex portion 401 illustrated in FIG. 3 is exemplarily illustrated as the pressing member 40 including the second convex portion 402, but the shape of the first convex portion 401 is not limited to that illustrated. Moreover, the pressing member 40 including the second convex portion 402 does not necessarily need to include the first convex portion 401.

In FIG. 9, the pressing member 40 including the first convex portion 401 and the second convex portion 402 illustrated in FIG. 8 is exemplarily illustrated as the pressing member 40 having the openings 403, but the shape of the first convex portion 401 and disposition of the second convex portion 402 are not limited to those illustrated. Moreover, the pressing member 40 having the openings 403 does not necessarily need to include the first convex portion 401 and/or the second convex portion 402.

While the present disclosure has been described in detail, the present disclosure is not limited to the aforementioned embodiments, and various changes, improvements, and the like can be made without departing from the gist of the present disclosure.

In the embodiment, (1) an electrochemical cell unit includes:
an electrochemical cell including
a first electrode having an absorbent that absorbs carbon dioxide,
a second electrode, and
an insulation layer positioned between the first electrode and the second electrode; and a pressing member positioned on a side opposite to the insulation layer with the first electrode interposed therebetween, the pressing member pressing the electrochemical cell.

Moreover, (2) in the electrochemical cell unit according to (1) described above,
the first electrode may include a first member and a second member facing each other with the second electrode interposed therebetween,
the insulation layer may include a first insulation layer positioned between the first member and the second electrode, and a second insulation layer positioned between the second member and the second electrode, and
the pressing member may include a first pressing member positioned on a side opposite to the first insulation layer with the first member interposed therebetween, and a second pressing member positioned on a side opposite to the second insulation layer with the second member interposed therebetween.

Moreover, (3) in the electrochemical cell unit according to (1) or (2) described above, the pressing member may include a first convex portion that protrudes toward the first electrode and is in contact with the first electrode.

Moreover, (4) in the electrochemical cell unit according to (3) described above, the first convex portion may include one or more protruding portions that extend radially outward from a center portion of the pressing member in a plan view.

Moreover, (5) in the electrochemical cell unit according to (3) described above, the first convex portion may include a plurality of protruding portions that extend from one end side of the pressing member toward the other end side of the pressing member in a plan view.

Moreover, (6) in the electrochemical cell unit according to any one of (1) to (5) described above, the pressing member may include a second convex portion that protrudes from a side portion of the pressing member toward the electrochemical cell in a plan view.

Moreover, (7) in the electrochemical cell unit according to (6) described above, the second convex portion may include a plurality of protruding portions positioned at opposite side portions of the pressing member in a plan view.

Moreover, (8) in the electrochemical cell unit according to any one of (1) to (7) described above, the pressing member may have a plurality of openings that extend through the pressing member in a thickness direction.

Moreover, (9) in the electrochemical cell unit according to (8) described above, a greater number of the openings may be positioned in a peripheral region located outside a center region of the pressing member in a plan view than in the center region.

Moreover, (10) in the electrochemical cell unit according to any one of (1) to (9) described above, in a plan view of the electrochemical cell, a contour of the first electrode may be positioned inside a contour of the pressing member, or may coincide with the contour of the pressing member.

The embodiments disclosed herein should be considered exemplary in all respects and not restrictive. The embodiments described above may be embodied in various forms. The aforementioned embodiments may be omitted, replaced, or changed in various forms without departing from the scope of the appended claims and the purpose thereof.

### REFERENCE SIGNS

1 Cell
10 First electrode
20 Second electrode
30 Insulation layer
40 Pressing member
100 Cell unit
401 First convex portion
402 Second convex portion
403 Opening

## Claims

1. An electrochemical cell unit comprising:
an electrochemical cell comprising
a first electrode having an absorbent that absorbs carbon dioxide,
a second electrode, and
an insulation layer positioned between the first electrode and the second electrode; and
a pressing member positioned on a side opposite to the insulation layer with the first electrode interposed therebetween, the pressing member pressing the electrochemical cell.

2. The electrochemical cell unit according to claim 1, wherein
the first electrode comprises a first member and a second member facing each other with the second electrode interposed therebetween,
the insulation layer comprises a first insulation layer positioned between the first member and the second electrode, and a second insulation layer positioned between the second member and the second electrode, and
the pressing member comprises a first pressing member positioned on a side opposite to the first insulation layer with the first member interposed therebetween, and a second pressing member positioned on a side opposite to the second insulation layer with the second member interposed therebetween.

3. The electrochemical cell unit according to claim 1 or 2, wherein the pressing member comprises a first convex portion that protrudes toward the first electrode and is in contact with the first electrode.

4. The electrochemical cell unit according to claim 3, wherein the first convex portion comprises one or more protruding portions that extend radially outward from a center portion of the pressing member in a plan view.

5. The electrochemical cell unit according to claim 3, wherein the first convex portion comprises a plurality of protruding portions that extend from one end side of the pressing member toward the other end side of the pressing member in a plan view.

6. The electrochemical cell unit according to any one of claims 1 to 5, wherein the pressing member comprises a second convex portion that protrudes from a side portion of the pressing member toward the electrochemical cell in a plan view.

7. The electrochemical cell unit according to claim 6, wherein the second convex portion comprises a plurality of protruding portions positioned at opposite side portions of the pressing member in a plan view.

8. The electrochemical cell unit according to any one of claims 1 to 7, wherein the pressing member has a plurality of openings that extend through the pressing member in a thickness direction.

9. The electrochemical cell unit according to claim 8, wherein a greater number of the openings are positioned in a peripheral region located outside a center region of the pressing member in a plan view than in the center region.

10. The electrochemical cell unit according to any one of claims 1 to 9, wherein, in a plan view of the electrochemical cell, a contour of the first electrode is positioned inside a contour of the pressing member, or coincides with the contour of the pressing member.
